Europäisches Patentamt

**European Patent Office**

Office européen des brevets

(11) Publication number:

**0 298 595**
**A1**

## (12) EUROPEAN PATENT APPLICATION

(21) Application number: 88304798.7

(22) Date of filing: 26.05.88

(51) Int. Cl.⁴: **F16H 15/52**

(30) Priority: 08.07.87 GB 8716023

(43) Date of publication of application:
**11.01.89 Bulletin 89/02**

(84) Designated Contracting States:
**DE FR GB IT**

(71) Applicant: **The British Petroleum Company
p.l.c.
Britannic House Moor Lane
London EC2Y 9BU(GB)**

(72) Inventor: **Chinery, David
The British Petroleum Company p.l.c.
Chertsey Road
Sunbury-on-Thames Middlesex TW16
7LN(GB)**

(74) Representative: **Dodding, Robert Anthony et
al
BP INTERNATIONAL LIMITED Patents
Division Chertsey Road
Sunbury-on-Thames Middlesex, TW16
7LN(GB)**

(54) Transmission system.

(57) A transmission system comprising two flexible shafts within a stator (6) has an input shaft (1) having an eccentric weight (9) which urges the ends (7,8) of the shafts towards the stator and brings a wheel (10) on the output shaft (2) into contact with the inner surface (25) of the stator whereby rotation of the input shaft causes the wheel to roll around the inner surface of the stator. The system may be used as a variable transmission by moving an axially non-uniform inner surface of the stator axially with respect to the shafts. The system may be used as a bi-directional output by rotating the stator against the rotation of the wheel. The transmission system may be used for stirrers and the like.

*FIG.1*

## TRANSMISSION SYSTEM

This invention relates to a transmission system.

Transmission systems are known for transmitting rotary motion from an input shaft to an output shaft wherein the input shaft drives a cone around the inner surface of a stator such that the axis of the cone is moved around the surface at a lower speed (revolutions per minute) than the speed of the input shaft. The rotation of the axis of the cone is transmitted as a rotation to the output shaft by a flexibly-coupled shaft. The reduction ratio of the transmission system is the ratio of input shaft speed (revolutions per minute) to output shaft speed. With an axially non-uniform stator surface, changing the position of the stator axially with respect to the cone changes the ratio of input to output shaft speeds. Such transmission systems are described for example in United States patents US 4682517 and US 3910137.

Such systems require good contact between the driven cone and the stator surface. This may be achieved by mechanical loading of the cone and by careful attention to the geometry of the surfaces. This may render the systems vulnerable to comparatively small amounts of wear on the cone and stator surface or on guiding components such as bearings. Furthermore, since the cone is driven around the stator surface, wear can occur if the system stalls causing the cone to rotate against the stator surface.

Thus according to the present invention there is provided a transmission system comprising a flexible input shaft and a flexible output shaft located within a stator, characterised in that the shafts are located one within the other and each shaft has a first end in fixed radial relationship to the stator, the output shaft having a wheel and the input shaft having an eccentric weight which urges the second ends of the shafts towards the stator such that the wheel of the output shaft is in contact with the inner surface of the stator whereby rotation of the input shaft causes the wheel of the output shaft to roll around the inner surface of the stator.

The eccentric weight may be mounted on the input shaft by known means such as glueing and the like or it may be integrally formed with the input shaft. The eccentric weight is selected to have the minimum mass necessary for the expected duty to minimise unnecessary vibration of the system.

By wheel it is intended to include all equivalent forms for example, a spoked wheel with the rim comprising the ends of the spokes or a conventional disc-shaped wheel and the like. Preferably, the wheel is circular but other shapes may be used, for example elliptical. The wheel may be rubber-rimmed with the stator being of plastics material. The wheel and stator may be metal and a suitable traction fluid may be used.

Preferably, the inner surface of the stator is of a circular transverse cross-section but other cross-sections may be used, for example elliptical. By transverse cross-section is meant a cross-section in a plane perpendicular to the axis of the radially fixed ends of the shafts.

The input shaft may be located within the output shaft or the output shaft may be located within the input shaft. Preferably, there is a bearing between the shafts at each end of the shafts.

In use, the input shaft with its eccentric weight is rotated by, for example, an electric motor. The rotation of the eccentric weight around the input shaft causes the wheel to roll around the inner surface of the stator and hence rotate the output shaft.

The reduction ratio of the transmission system, hereindefined as the ratio of input shaft speed (revolutions per minute) to output shaft speed (revolutions per minute), is related to the difference between the peripheral dimension of the wheel and the path length of the wheel around the inner surface of the stator. For a circular wheel and a circular inner surface of the stator the peripheral dimension of the wheel is the circumference of the wheel and the path length is the circumference of the inner surface of the stator at the positions of the wheel. If the wheel radius is defined as $r_p$ and the radius of the inner surface of the stator at the position of the wheel is $r_s$, then the angular displacement of the wheel $\theta$ (as a fraction of a rotation) per revolution around the stator is given as:

$$\theta = \frac{2\pi r_s - 2\pi r_p}{2\pi r_p}$$

$$= \frac{r_s - r_p}{r_p}$$

Ignoring slippage, the wheel will roll around the inner surface of the stator at the same speed (revolutions per minute) as the speed of the input shaft. Therefore, for each rotation of the input shaft the output shaft will rotate $\theta$ revolutions and the reduction ratio of the system is

$$1/\theta = \frac{r_p}{r_s - r_p}$$

Therefore, for example with a 34mm diameter wheel and an inner surface of the stator of 35mm diameter at the position of the wheel the reduction ratio of the transmission system will by 34:1.

Preferably, the stator is capable of axial movement with respect to the shafts and the inner surface of the stator is of an axially non-uniform transverse cross-section. Most preferably, the inner surface of the stator is of an axially non-uniform circular transverse cross-section, that is to say the circumference of the circular transverse cross-section of the inner surface of the stator is different at different positions along the axis of the radially fixed ends of the shafts. The inner surface of the stator may be of conical or trumpet shape. By moving the stator axially with respect to the shafts the axially non-uniform transverse cross-section of the inner surface of the stator changes the path length of the wheel around the inner surface of the stator and hence changes the ratio of input to output shaft speeds. In a preferred embodiment with the stator in a fully extended position the wheel is held fixed by the stator, preventing rotation. If the stator is gradually moved from the extended position the wheel will start to roll around the inner surface of the stator and by selecting a suitable shape for the inner surface of the stator, the difference between the peripheral dimension of the wheel and the path length of the wheel around the inner surface of the stator will be small so that the output shaft will rotate only slowly, giving a very high reduction ratio for the transmission system. It is possible to select the shape of the inner surface of the stator so that further movement of the stator causes the ratio of input shaft speed to output shaft speed to pass through unity and beyond so that the transmission system becomes a step-up system.

The present invention may be used for applications where the output torque should increase with speed, for example stirrers, mixers, propellors and the like, since it is believed that the increase in the centrifugal force on the eccentric weight as the difference between the peripheral dimension of the wheel and the path length of the wheel around the inner surface of the stator increases will apply extra load to the wheel, increasing the torque handling capacity of the transmission system.

The coaxial nature of the transmission may facilitate application to a motor with a hollow shaft to drive the input shaft, with the variable speed output shaft passing through the motor. The complete system would then be cylindrical, with speed control being by means of a slidable peg on the side of the stator.

The stator may be rotatable about the axis of the shafts so that the system may be used as a bi-directional transmission system. By suitable gearing the input shaft and stator may be rotated at constant speed in the same directions by a common power source. Suitable selection of the shape of the inner surface of the stator will enable the rolling of the wheel and hence the rotation of the output shaft to be cancelled out by the rotation of the stator with the stator in an axial mid position. Movement of the stator away from the mid position will cause a net rotation of the output shaft in either direction depending upon the shape and position of the stator. This embodiment may be used for servo mechanisms.

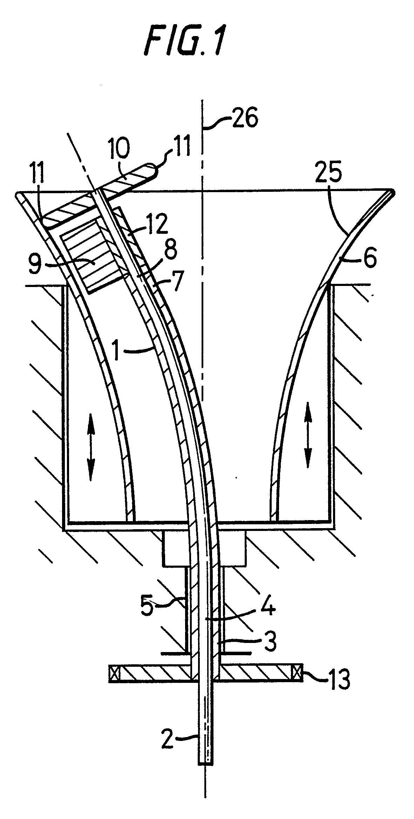

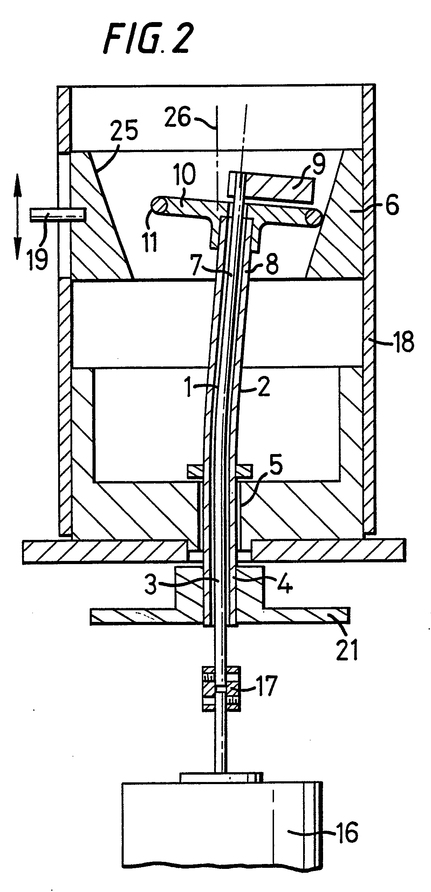

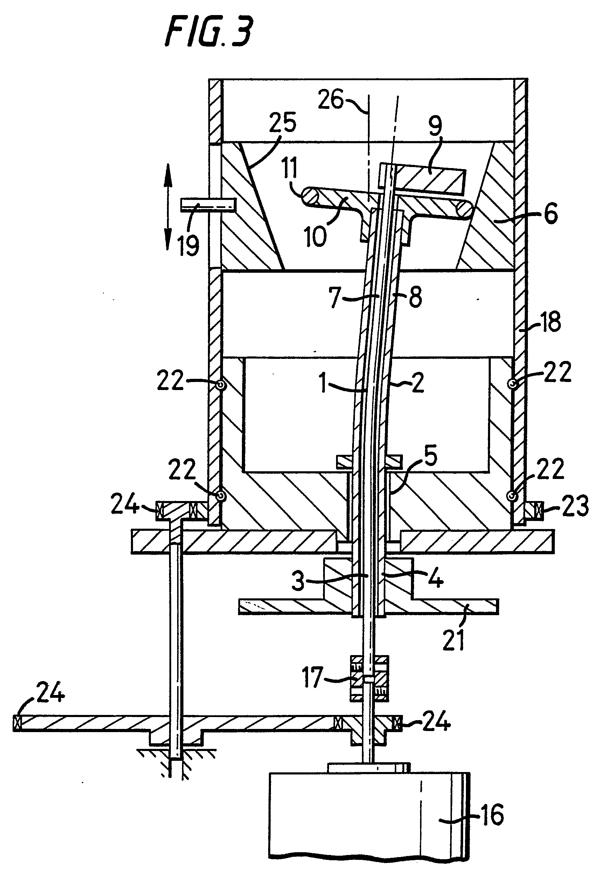

The invention will now be described by way of example only and with reference to the accompanying drawings. Figure 1 represents in longitudinal cross-section a transmission system according to the present invention with variable output. Figure 2 represents in longitudinal cross-section a similar transmission system to that in Figure 1 except that the input shaft is within the output shaft. Figure 3 represents in longitudinal cross-section a transmission system according to the present invention which has a variable bi-directional output.

In Figure 1 a transmission system according to the present invention comprises an output shaft (2) within an input shaft (1), the shafts being flexible and each having a first end (3,4) mounted in a bearing (5) which is fixed radially with respect to a stator (6). The second ends of the shafts (7,8) are urged towards the stator (6) by an eccentric weight (9) on the input shaft (1). The output shaft (2) has a wheel (10) with a rim (11) which is held in contact with the inner surface (25) of the stator (6) by the eccentric weight (9). The inner surface (25) is of a trumpet shape. A bearing (12) is provided between the shafts (1,2) at the second ends (7, 8).

In use, the input shaft (1) is rotated at constant speed by a motor (not shown) acting as a gear (13). The rotation of the eccentric weight (9) around the input shaft (1) causes the planet wheel (10) to roll around the inner surface (25) of the stator (6). As the wheel (10) rolls with its rim (11) in contact with the inner surface (25) of the stator (6), the wheel (10) and hence the output shaft (2) is rotated. By moving the stator (6) axially with respect to the shafts (1,2) the trumpet shape of the inner surface (25) of the stator (6) changes the path length of the wheel (10) around the inner surface of the stator and hence changes the ratio of the input to output shaft speeds. With the stator in a fully extended position the wheel (10) is held fixed by the stator preventing rotation.

In Figure 2 a transmission system according to the present invention comprises an input shaft (1) within an output shaft (2), the shafts being flexible and each having a first end (3,4) mounted in a bearing (5) which is fixed radially with respect to a stator (6). The second ends of the shafts (7,8) are urged towards the stator (6) by an eccentric weight (9) on the input shaft (1). The output shaft (2) has a wheel (10) with a rim (11) which is held in contact with the inner surface (25) of the stator (6) by the eccentric weight (9). The output shaft (2) has an output wheel (21). The inner surface (25) of the stator is of a conical shape.

In use, the input shaft (1) is rotated at constant speed by a motor (16) acting through coupling (17). The rotation of the eccentric weight (9) around the input shaft (1) causes the wheel (10) to roll around the inner surface (25) of the stator (6). As the wheel (10) rolls with its rim (11) in contact with the inner surface (25) of the stator (6), the wheel (10) and hence the output shaft (2) is rotated. This turns output wheel (21). The stator (6) is mounted in a guide tube (18) and may be moved axially with respect to the shafts by peg (19). Peg (19) also stops the stator rotating. By moving the stator (6) axially with respect to the shafts (1,2) the path length of the wheel (10) around the inner surface of the stator and hence changes the ratio of the input to output shaft speeds. With the stator in a fully extended position the wheel (10) is held fixed by the stator preventing rotation.

In Figure 3 a transmission system according to the present invention comprises an input shaft (1) within an output shaft (2), the shafts being flexible and each having a first end (3,4) mounted in a bearing (5) which is fixed radially with respect to a stator (6). The second ends of the shafts (7,8) are urge towards the stator (6) by an eccentric weight (9) on the input shaft (1). The output shaft (2) has a wheel (10) with a rim (11) which is held in contact with the inner surface (25) of the stator (6) by the eccentric weight (9). The output shaft (2) has an output wheel (21). The inner surface (25) of the stator is of a conical shape. The stator (6) is rotatable about the axis (26) of the first ends (3,4) of the shafts (1,2). The stator (6) is mounted on a guide tube (18) which in turn is mounted on a ball bearing race (22). The stator may be moved axially with respect to the shafts by a peg (19). The guide tube (18) has a gear ring (23) and may be driven at constant speed by the motor (16) through suitable gears (24).

In use, the input shaft (1) is rotated at constant speed by a motor (16) acting through coupling (17). The rotation of the eccentric weight (9) around the input shaft (1) causes the wheel (10) to roll around the inner surface (25) of the stator (6). As the wheel (10) rolls with its rim (11) in contact with the inner surface (25) of the stator (6), the wheel (10) and hence the output shaft (2) is rotated. This turns output wheel (21). The gears (24) are selected so that when the stator is in a mid position the rotation of the stator (6) cancels out the rolling of the wheel (10) resulting in a net zero rotation of the output shaft (2). Moving the stator in either direction from the mid position results in net rotation of the output shaft at a rate and a direction dependent upon the shape of the inner surface of the stator.

A transmission system was constructed according to Figure 2. The flexible outer shaft was constructed from a bicycle Bowden cable outer conduit and the inner shaft from 1.6mm diameter piano wire. A 15 gramme eccentric weight was attached to the input shaft which was driven by an electric motor. The wheel was made of an aluminium alloy and had a rubber rim giving an outside diameter of 34mm. A 70mm diameter output wheel was fixed to the output shaft. The inner surface of the stator was of a conical shape tapering from 45mm diameter to 32mm diameter over a length of 40mm. The stator was also made of aluminium alloy and had a normal machined finish. In tests the output could be varied from zero to about 100rpm with the input motor at about 1000rpm. As expected, some degree of vibration was experienced but this was not considered excessive.

Although the system was not equipped for qualitative measurement of torque, as expected, torque transmission capability was not found to degrade as the reduction ratio of the system was reduced by moving the stator.

## Claims

1. A transmission system comprising a flexible input shaft (1) and a flexible output shaft (2) located within a stator (6), characterized in that the shafts are located one within the other and each shaft has a first end (3,4) in fixed radial relationship to the stator, the output shaft having a wheel (10) and the input shaft having an eccentric weight (9) which urges the second ends (7,8) of the shafts towards the stator such that the wheel of the output shaft is in contact with the inner surface (25) of the stator, whereby rotation of the input shaft causes the wheel of the output shaft to roll around the inner surface of the stator.

2. A transmission system according to claim 1 in which inner surface (25) of the stator is of a circular transverse cross-section.

3. A transmission system according to claim 1 fin which the stator is capable of axial movement with respect to the shafts.

4. A transmission system according to claim 3 in which the inner surface (25) of the stator is of an axially non-uniform transverse cross-section.

5. A transmission system according to claim 4 in which the inner surface (25) of the stator is of an axially non-uniform circular transverse cross-section.

6. A transmission system according to claim 5 in which the inner surface (25) of the stator is of a trumpet shape.

7. A transmission system according to claim 5 in which the inner surface (25) of the stator is of a conical shape.

8. A transmission system according to any one of claims 3 to 7 in which the wheel may be locked in a fixed position by the stator.

9. A transmission system according to any one of the preceding claims in which the output shaft is mounted within the input shaft.

10. A transmission system according to any one of claims 1 to 8 in which the input shaft is located within the output shaft.

11. A transmission system according to any one of the preceding claims in which the stator is rotatable about the axis (26) of the first ends (3,4) of the shafts.

12. A transmission system according to claim 11 in which the stator is rotatable at a constant speed about the axis (26) of the first ends (3,4) of the shafts.

13. A transmission system according to claim 11 or claim 12 in which the stator and the input shaft are rotatable by a common power source (16).

# FIG.1

# FIG. 2

EP 0 298 595 A1

**FIG.3**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y | FR-A-1 338 321 (GLAENZER SPICER S.A.) * Pages 2,5; figure 20 * | 1 | F 16 H 15/52 |
| A | | 2,3,5,7,10 | |
| Y | FR-A-2 315 640 (HEINTZ) * Whole document * | 1 | |
| A | | 2,9,10,11,12 | |
| A | DE-A-2 361 772 (WOBST) * Pages 1-2; figure * | 1,9,10,11,12 | |
| D,A | US-A-4 682 517 (FRANCIS et al.) | | |
| D,A | US-A-3 910 137 (NEDELJKOVITCH) | | |

TECHNICAL FIELDS SEARCHED (Int. Cl.4)

F 16 H 15/00
F 16 H 3/00

The present search report has been drawn up for all claims

| Place of search | Date of completion of the search | Examiner |
|---|---|---|
| THE HAGUE | 07-10-1988 | FLORES E. |